# EUROPÄISCHE PATENTANMELDUNG

(11) **EP 0 995 953 A2**
(43) Veröffentlichungstag der Anmeldung: **26.04.2000**
(21) Anmeldenummer: 99121125.1
(22) Anmeldetag: 22.10.1999
(51) Int. Cl.: F24D 3/08, F24D 11/00, F28D 20/00

(54) **Warmwasser-Speicheranordnung**

(30) Priorität: 22.10.1998 DE 19848648
(71) Anmelder: Sailer, Roland, 89601 Schelklingen (DE); Sailer, Wolfgang, 89601 Schelklingen (DE)
(72) Erfinder: Sailer, Roland, 89601 Schelklingen (DE); Sailer, Wolfgang, 89601 Schelklingen (DE)
(74) Vertreter: Weber, Gerhard

(57) **Zusammenfassung**

Für eine Warmwasser-Speicheranordnung nach dem Speicher-in-Speicher-Bauprinzip mit einer den Innenspeicher (b) eng umgebenden, einen Strömungsspalt einschließenden Hüllwand (a) werden Maßnahmen zur effizienteren Energieausnutzung für die Erwärmung von Brauchwasser im Innenspeicher (b) angegeben, was insbesondere bei der Aufheizung des Hauptspeicher-Heizwassers über Brennwert-Systeme oder Solarkollektoren von besonderem Vorteil ist.

## Beschreibung

Die Erfindung betrifft eine Warmwasser-Speicheranordnung nach dem Oberbegriff des Patentanspruchs 1.

Warmwasser-Speicheranordnungen nach dem Speicher-in-Speicher-Bauprinzip haben die vorteilhafte Eigenschaft, daß gegenüber einer Anordnung mit zwei getrennten Speichern keine wesentliche Vergrößerung der zur Umgebung weisenden Oberfläche erwärmter Speicherflächen gegeben ist. Typischerweise dient der Innenspeicher als Brauchwasserspeicher und der Hauptspeicher als Heizwasserspeicher, welcher insbesondere auch solarbeheizt sein kann. Solche Speicher-in-Speicher-Anordnungen sind Systemen mit Wärmetauschern vor allem dann vorzuziehen, wenn kurzzeitig hohe Warmwasser-Zapfleistungen benötigt werden.

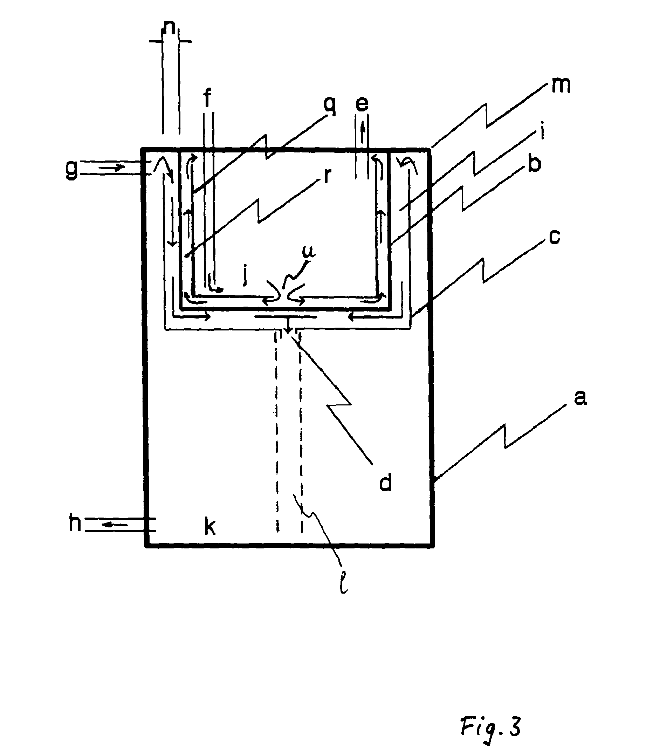

Aus einer vergleichenden Studie "Performance Comparison of Combitanks Using a Six-Day Test" von Lorenz, Bales und Bromann in Proceedings International Conference North Sun, 1997, Helsinki, S. 119 - 128 sind verschiedene Speicher-in-Speicher-Anordnungen bekannt. Neben anderen ist in der dortigen Abbildung 3-1 eine Ausführung beschrieben, bei welcher ein Brauchwasser-Innenspeicher innerhalb eines solargeheizten Hauptspeichers angeordnet ist. Der Innenspeicher ist von einer in geringem Abstand von seiner Wandung verlaufenden Hülle umgeben. Der enge Zwischenraum zwischen Hülle und Innenspeicher weist an seinem oberen Rand eine Einströmöffnung auf und mündet an seinem tiefsten Punkt in ein bis zum Boden des Hauptspeichers reichendes Abströmrohr.

Wird über eine im Innenspeicher oben angeordnete Entnahmeleitung warmes Brauchwasser entnommen, so strömt über eine im Innenspeicher in dessen unterem Bereich endende Zuführleitung kaltes Brauchwasser nach und entzieht dem in dem Zwischenraum befindlichen Heizwasser Wärme. Dies setzt eine Konvektion des Heizwassers in Gang, bei welcher in dem Zwischenraum abgekühltes Heizwasser nach unten sinkt und durch die obere Öffnung des Zwischenraums warmes Heizwasser nachströmt. Das durch das Abströmrohr absinkende abgekühlte Heizwasser wird durch das Abströmrohr zum tiefsten Punkt des Hauptspeichers geleitet.

Dieser Ausführung eines Speicher-in-Speicher-Systems wird aber in dem Vergleichstest keine besonders hohe Ausnutzung solarer Heizenergie zuerkannt, Wesentlich bessere Ergebnisse liefern Systeme mit externen Wärmetauschern.

Aufgabe der vorliegenden Erfindung ist es, eine Warmwasser-Speicheranordnung nach dem Speicher-in-Speicher-Bauprinzip anzugeben, welche eine verbesserte Ausnutzung der dem Heizwasser des Hauptspeichers zugeführten Energie für die Brauchwassererwärmung zeigt.

Die Erfindung ist im Patentanspruch 1 beschrieben. Die abhängigen Ansprüche enthalten vorteilhafte Ausgestaltungen und Weiterbildungen der Erfindung.

Es zeigt sich, daß abweichend von dem Aufbau der bekannten Anordnungen, bei welchen eine möglichst tiefe Ableitung des abströmenden abgekühlten Heizwassers angestrebt und realisiert ist, die Ausbildung mehrerer seitlicher Öffnungen in dem Abströmkanal eine deutliche Verbesserung in der Ausnutzung der dem Hauptspeicher zugeführten Energie erbringt. Dies ist insbesondere in einer weitgehenden Erhaltung einer vorliegenden Temperaturschichtung der als Heizwasser bezeichneten Flüssigkeit im Hauptspeicher begründet.

Die Erhaltung niedriger Temperaturen im unteren Speicherbereich ermöglicht höhere Wirkungsgrade bei der Aufheizung des Heizwassers über Brennwertgeräte oder insbesondere Solarkollektoren. Da das im Abströmkanal abströmende abgekühlte Heizwasser auf Höhe einer Heizwasserschicht im wesentlichen gleicher Dichte im Hauptspeicher austreten kann, ist die Strömung auch nicht vom Aufbau tieferliegender kühlerer Heizwasserschichten abhängig.

Während die bekannte Anordnung nur auf eine bestimmte Temperatursituation z. B. einen bestimmten Kaltwasseranteil im Innenspeicher optimierbar ist und abseits dieser bestimmten Situation die Effizienz schnell nachläßt, ist die erfindungsgemäße Anordnung über einen weiten Bereich variationstolerant.

Eine andere vorteilhafte Möglichkeit, die Energieausnutzung in einem Speicherin-Speicher-System zu verbessern, besteht darin, in dem zwischen Hüllwand und Innenspeicher gebildeten Spalt oder dem Abströmkanal Leitstrukturen vorzusehen, welche einer freien Strömung entgegengerichtet sind und diese vermindern. In dem Abströmkanal angeordnete strömungsmindernde Leitstrukturen sind vorzugsweise vor einer ersten seitlichen Öffnung angeordnet. Die Verminderung der Strömung bewirkt ein längeres Verweilen von mit hoher Temperatur aus dem Hauptspeicher in den Strömungsspalt fließendem Heizwasser in dem Strömungsspalt und damit eine erhöhte Wärmeabgabe an den Innenspeicher. Idealerweise hat das in den Abströmkanal eintretende Wasser im wesentlichen dieselbe Temperatur wie die kühlste Fläche des Innenspeichers gegen den Strömungsspalt.

Leitstrukturen können beispielsweise querschnittsverengende Strömungsblenden sein, welche insbesondere am Übergang des Strömungsspalts zum Abströmkanal oder an der oberen Eintrittsöffnung des Strömungskanals angeordnet sein können. Andere vorteilhafte Ausführungsformen können Umwegelemente im Strömungsspalt sein, welche einer Strömung auf kürzestem Weg zwischen oberer Eintrittsöffnung des Strömungsspalts und Übergang zum Abströmkanal entgegenstehen und die Strömung umlenken. Insbesondere können solche Umwegelemente in einem im wesentlichen vertikal verlaufenden Abschnitt des Strömungsspalts eine horizontale Strömungskomponente und in einem im wesentlichen horizontalen Abschnitt (bezüglich des Austritts zum Abströmkanal) tangentiale Strömungskomponente bewirken. Die Umwegelemente können ferner eine gleichmäßige Umströmung des Innenspeichers auch bei ungleichmäßiger Dicke des Strömungsspalts infolge von Fertigungstoleranzen bewirken.

Die Leitstrukturen können vorteilhafterweise aus Material mit geringer Wärmeleitfähigkeit bestehen. Die Dicke des Strömungsspalts als Abstand zwischen Innenspeicher und der diesen umgebenden Hüllwand beträgt vorteilhafterweise zumindest im überwiegenden Teil des Strömungsspalts weniger als 10 mm, insbesondere weniger als 4 mm, wodurch sich einerseits ein günstiges Verhältnis von beaufschlagter Oberfläche des Innenspeichers zu Volumen des im Spalt befindlichen Heizwassers ergibt, und zum anderen noch ein ausreichender Strom von Heizwasser durch den Strömungsspalt gegeben ist.

Die einzelnen die Strömung beeinflussenden Parameter der Leitstrukturen und/oder der Dimensionierung des Strömungsspalts können zur Anpassung der Anordnung an verschiedene Leistungsanforderungen variiert werden. Der Brauchwasserspeicher hat typischerweise eine an sich gebräuchliche zylindrische Form mit einem zum Hauptspeicher hin gewölbten Boden, ohne daß aber die Erfindung auf eine bestimmte Geometrie des Innenspeichers beschränkt ist.

Die dem Strömungsspalt zugewandte Wandung des Innenspeichers besteht vorteilhafterweise aus gut wärmeleitendem Material, typischerweise aus Stahl, wogegen die den Strömungsspalt zum Hauptspeicher hin abgrenzende Hüllwand ein schlechtes Wärmeleitvermögen zeigt und beispielsweise aus Kunststoff bestehen kann. Die Wand des Innenspeichers kann zur besseren Wärmeübertragung vom Heizwasser im Strömungsspalt zum Brauchwasser im Innenspeicher in den Strömungsspalt und/oder ins Innere des Innenspeichers weisende oberflächenvergrößernde Strukturen wie beispielsweise Rippen aufweisen. Solche Strukturen können auch als Leitstrukturen zur Strömungsbeeinflussung dienen.

Eine andere vorteilhafte Maßnahme zur Erwärmung des Brauchwassers im Innenspeicher eines Speicher-in-Speicher-Systems besteht darin, daß im Innern des Innenspeichers eine Leitwand in geringem Abstand von der Innenspeicherwand insbesondere über einen vertikalen Abschnitt der Innenspeicherwand verläuft und mit dieser einen Aufströmspalt im Innenspeicher bildet. Die Warmwasserentnahme erfolgt typischerweise über einen im Innenspeicher oben angeordneten Auslass und nachströmendes kaltes Wasser wird über ein Zulaufrohr in den unteren Bereich des Innenspeichers geführt. Bei der Erwärmung des Brauchwassers strömt dieses entlang der dem Strömungsspalt verlaufenden Wand aufwärts und wird dabei immer stärker erwärmt und erreicht im Idealfall am oberen Ende des Aufströmspalts die maximale Temperatur, so daß ohne Verwirbelung und anstelle einer gleichmäßigen Erwärmung des Innenspeicher-Inhalts schnell eine hohe Temperatur im oberen Bereich des Innenspeichers erreicht wird und somit auch nach weitgehender Entnahme warmen Brauchwassers schnell wieder Brauchwasser hoher Temperatur an dem Entnahme-Auslass zur Verfügung steht. Bei weiterer Wärmezufuhr wird dann die Schichtgrenze des auf hoher Temperatur befindlichen Brauchwassers gegen eine unterlegende Kaltwasserschicht sukzessiv nach unten verschoben und der Anteil warmen Brauchwassers im Innenspeicher beständig erhöht. Auch für das im Aufströmspalt nach oben strömende Brauchwasser können Leitstrukturen im Aufströmspalt vorgesehen sein, welche die Verweilzeit des aufströmenden Brauchwassers verlängern, so daß eine Erwärmung auf eine hohe Temperatur, welche im Idealfall gleich der Einströmtemperatur des Heizwassers in den Strömungsspalt ist, gewährleistet ist.

Der Abströmkanal kann günstigerweise nach Art eines in der DE 19704914 C1 beschriebenen Schichtkanals mit einer Vielzahl seitlicher Auslässe ausgeführt sein und im wesentlichen bis zum Boden des Hauptspeichers reichen. Das im Abströmkanal absinkende und seitlich ausströmende Heizwasser kann dabei eine anfängliche Umkehr der Strömungsrichtung von mehr als 90 ° erfahren und durch Leitelemente im wesentlichen horizontal in die Hauptspeicherumgebung eingeschichtet werden.

Die Erwärmung des Heizwassers kann insbesondere auch über Solarkollektoren erfolgen, wobei eine Einschichtung erwärmten Heizwassers über eine Schichtladevorrichtung wie beispielsweise nach Art der vorgenannten DE 19704914 C1 besonders vorteilhaft und wirkungsvoll ist.

Die Erfindung ist prinzipiell auch zur Wärmeübertragung in umgekehrter Richtung von einem Innenspeicher in einen Hauptspeicher einsetzbar, wobei dann der Innenspeicher im unteren Bereich des Hauptspeichers angeordnet und mit extern aufgeheiztem Wasser versorgt ist.

Die Erfindung ist nachfolgend anhand bevorzugter Ausführungsbeispiele unter Bezugnahme auf die Abbildungen noch eingehend veranschaulicht. Dabei zeigt
- Fig. 1: einen Querschnitt durch eine erste Ausführungsform
- Fig. 2: eine Ausführungsform mit Leitstrukturen
- Fig. 3: eine Ausführungsform mit Strömungsführungen im Innenspeicher
- Fig. 4: eine Kombination der Ausführungen nach Fig. 2 und 3
- Fig. 5: Beispiele für Leitstrukturen

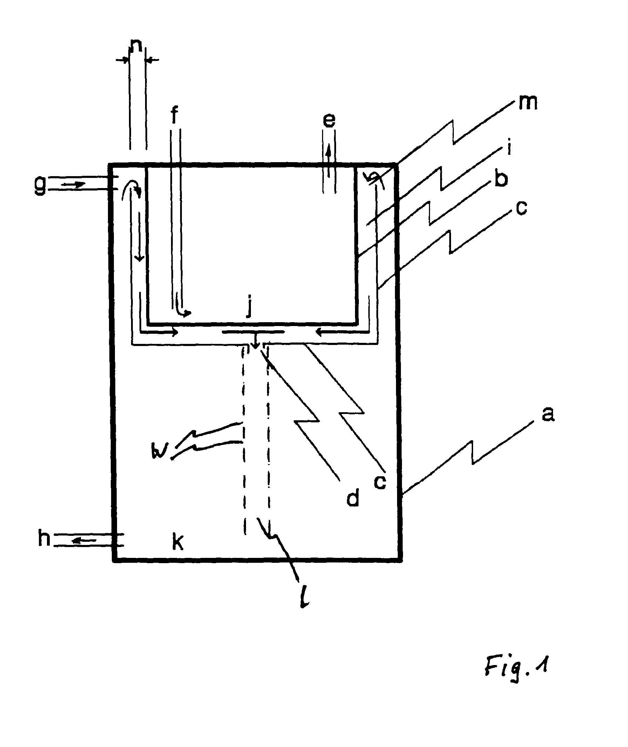

Die in Fig. 1 nicht maßstäblich im Querschnitt skizzierte Speicheranordnung zeigt einen Brauchwasserspeicher b als Innenspeicher innerhalb eines Heizwasserspeichers a als Hauptspeicher. Die Aufladung des Hauptspeichers a erfolgt beispielsweise über Solarkollektoren, wofür schematisch ein Heißwasserzulauf g im oberen Speicherbereich und ein Kaltwasserablauf h im unteren Speicherbereich des Hauptspeichers a eingezeichnet sind. Für die Verbindung und den Betrieb eines Pufferspeichers mit einer Solaranlage sind verschiedene auch hier einsetzbare Ausgestaltungen an sich bekannt. Vorteilhaft ist insbesondere die Heißwasserzuführung über eine in verschiedenen Variationen bekannte Schichtladevorrichtung. Bei Anschluß einer Heizanlage kann Öffnung g als Vorlauf und Öffnung h als Rücklauf dienen.

Wird aus dem Innenspeicher über eine obenliegende Entnahmeöffnung e warmes Brauchwasser entnommen, so strömt über eine in den unteren Bereich j des Innenspeichers führende Zuleitung f kaltes Wasser nach, ohne sich mit der oberen Schicht warmen Brauchwassers zu vermischen.

Der Innenspeicher ist seitlich und unten von einer Hüllwandung c umgeben, welche eine geringe Wärmeleitfähigkeit besitzt und den Innenspeicher gegen das Heizwasser im Hauptspeicher thermisch weitgehend isoliert. Die Hüllwand c verläuft zumindest überwiegend in geringem Abstand n vom Innenspeicher und schließt mit diesem einen Strömungsspalt i ein. Der Abstand n liegt beispielsweise in der Größenordnung von 2 mm.

Der Strömungsspalt i weist nach oben zum Hauptspeichervolumen eine Einströmöffnung m auf, welche beispielsweise aus einem Ringspalt, aus mehreren über den Umfang gleichmäßig verteilten Teilöffnungen usw. bestehen kann. Eine gleichmäßig über den Umfang verteilte Einströmung von Heizwasser aus dem Hauptspeicher ist vorteilhaft.

Die Hüllwand c weist in ihrem unteren Bereich, vorzugsweise an ihrer tiefsten Stelle eine Ausströmöffnung d auf, an welche sich ein bis in den unteren Bereich k des Hauptspeichers reichender Abströmkanal lanschließt. Der Abströmkanal weist eine Mehrzahl von seitlichen Auslassöffnungen w auf unterschiedlicher Höhe auf. Die Auslassöffnungen können in besonderer, eine verwirbelungsarme Einschichtung gewährleistender Form ausgeführt sein. Der Abströmkanal besteht vorzugsweise aus Material geringer Wärmeleitfähigkeit. Der Innenspeicher besteht dagegen aus einem Material höherer Wärmeleitfähigkeit, um eine gute Wärmeübertragung von dem den Strömungsspalt i durchströmendem Heizwasser auf das Brauchwasser zu ermöglichen.

Wenn bei Entnahme warmen Brauchwassers aus dem Innenspeicher kaltes Wasser nachströmt, kühlt die Innenspeicherwand im unteren Bereich ab, wodurch auch das Wasser in dem gegenüberstehenden Abschnitt des Strömungsspalts abkühlt. Durch die damit verbundene Dichteänderung des Wassers im Strömungsspalt sinkt dieses durch die Ausströmöffnung d nach unten in den Abströmkanal I ab und über die Einströmöffnung strömt heißes Wasser aus dem oberen Bereich des Hauptspeichers in den Strömungsspalt i nach. Das nachströmende heiße Wasser kommt zuerst in Kontakt mit dem oberen Bereich der Innenspeicherwand, so daß Brauchwasser in dem oberen Bereich des Innenspeichers bevorzugt erwärmt wird und schnell warmes Brauchwasser in einer oberen Schicht des Innenspeichers zur Entnahme verfügbar ist. Im Verlauf der abwärts gerichteten Strömung durch den Strömungsspalt i gibt das durchströmende Heizwasser ständig Wärme über die Innenspeicherwand an das Brauchwasser ab und kühlt dabei ab. Idealerweise ist die Temperatur des an der Ausströmöffnung d austretenden Heizwassers gleich der Temperatur der niedrigsten Temperatur des Brauchwassers im Innenspeicher. Diese kann mit zunehmender Erwärmung des Brauchwassers im Innenspeicher zunehmen.

Das abgekühlte Heizwasser sinkt im Abströmkanal I bis auf eine Höhe ab, in welcher das umgebende Heizwasser im Hauptspeicher gleiche Temperatur und damit gleich Dichte aufweist. Durch die Mehrzahl der seitlichen Auslassöffnungen kann das im Kanal absinkende abgekühlte Wasser in der Höhe der Heizwasserschicht gleicher Dichte austreten, so daß kaum Verwirbelungen und Vermischungen von Wasservolumina unterschiedlicher Temperaturen stattfinden. Dies ist insbesondere bei der Energiezufuhr über Brennwertsysteme oder Solarkollektoren für eine hohe Energieausnutzung von Bedeutung.

Die Strömungsrate ist für eine hohe Energieausnutzung bei der Erwärmung des Brauchwassers möglichst so gering zu halten, daß die Temperatur des an der Ausströmöffnung in den Abströmkanal übertretenden Heizwassers gleich der niedrigsten Temperatur des Brauchwassers im Innenspeicher ist. Andererseits soll die Zeit zur Wiedererwärmung des Brauchwassers nach Entnahme und Kaltwasserzulauf auch in nach Einsatzfall ggf. unterschiedlichem Rahmen bleiben. Die Strömungsrate, welche im Einzelfall ein besonders günstiges Wärmeübertragungsverhalten ergibt, kann beispielsweise durch die Dicke n des Strömungsspalts beeinflußt werden. Eine weitere vorteilhafte Maßnahme zur Beeinflussung der Strömungsrate sieht Leitstrukturen in Form von querschnittsverengenden Strömungsblenden in der Ausströmöffnung d und/oder der Einströmöffnung m vor, welche die Verweilzeit des Heizwassers im Strömungsspalt erhöhen können.

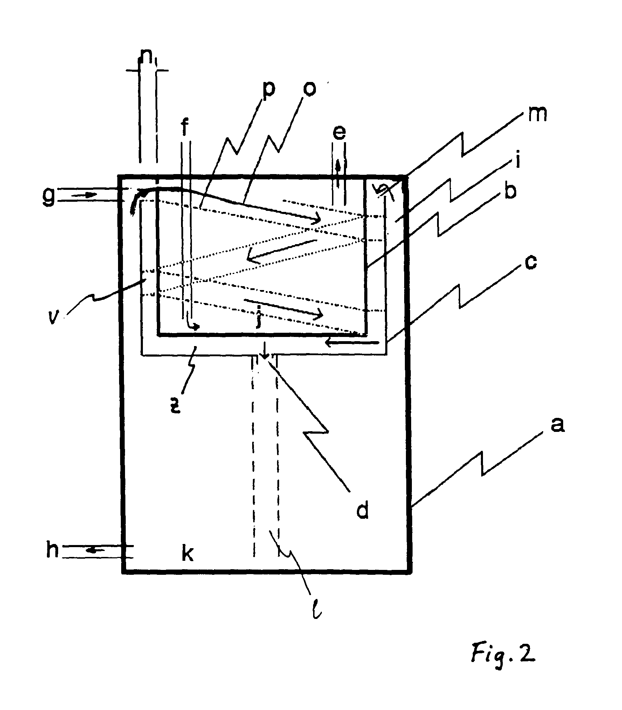

Gemäß einer weiteren vorteilhaften Ausführungsform sind im Verlauf des Strömungsspalts Leitstrukturen vorgesehen, welche einer freien Strömung auf kürzestem Weg entgegenstehen und so die Verweilzeit des Heizwassers im Strömungsspalt gegenüber Anordnungen gleicher Geometrie ohne solche Leitstrukturen erhöhen. Insbesondere können solche Leitstrukturen in einem im wesentlichen vertikalen Abschnitt v des Strömungskanals horizontale Strömungskomponenten und/oder in einem im wesentlichen horizontalen Abschnitt z des Strömungskanals tangentiale Strömungskomponenten bewirken. In der Fig. 2 ist eine solche Leitungsstruktur mit im vertikalen Abschnitt v des Strömungskanals wendelförmig um den Innenspeicher verlaufenden Strömungsleitelementen p angedeutet, welche zu einer schräg verlaufenden Strömung o führen. Der Weg, auf welchem das Heizwasser an der Innenspeicherwand entlangströmt, wird dadurch wesentlich erhöht.

Die Leitstrukturen können auch im Abströmkanal angeordnet sein, dort aber dann oberhalb der obersten seitlichen Auslassöffnung. Die verschiedenen Leitstrukturen können auch in Kombination realisiert sein und zusammenwirken.

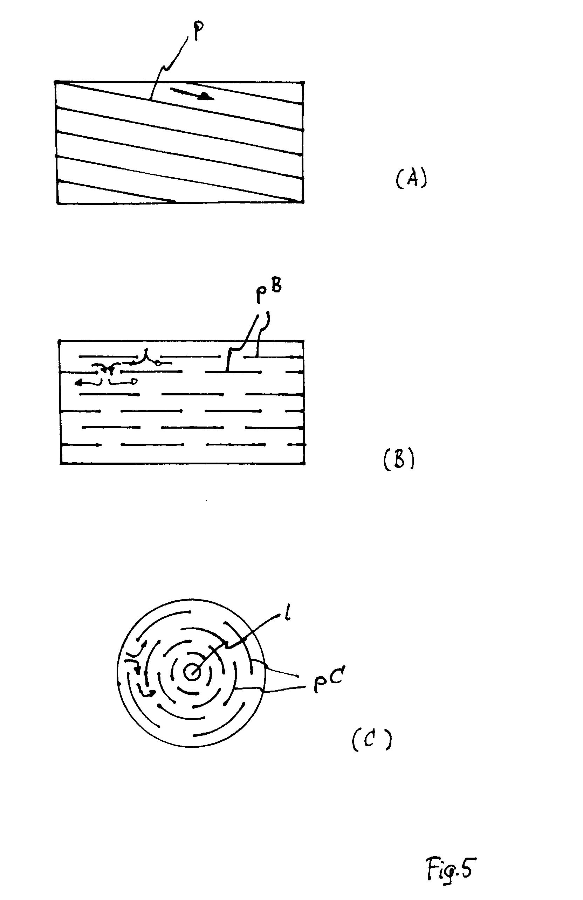

Die in Fig. 2 im Querschnitt skizzierte gewendelte Leitstruktur p ist in Fig. 5A als Mantelabwicklung skizziert. Ein anderes vorteilhaftes Beispiel einer strömungsmindernden Leitstruktur im vertikalen Abschnitt v des Strömungsspalts, mit in vertikaler Richtung in aufeinanderfolgenden Ebenen versetzt auf Lücke angeordneten Umlenkelementen pB ist in Fig. 5B gleichfalls als Mantelabwicklung skizziert. Eine solche Leitstruktur wirkt verstärkt nichtlinear strömungsmindernd, in der Weise, daß bei größeren Temperaturdifferenzen schnellere Strömungen stärker gebremst werden, wogegen langsame Strömungen bei geringen Temperaturdifferenzen nur wenig behindert werden. Eine Leitstruktur mit Umwegelementen pCfür den im wesentlichen horizontalen Abschnitt z des Strömungskanals am Bereich des Bodens des Innenspeichers ist in Fig. 5C als mehrfacher mäanderförmiger Strömungsweg skizziert. Für die Leitstrukturen sind eine Vielzahl von Variationen im einzelnen denkbar.

Bei der in Fig. 3 skizzierten Ausführung ist in Abweichung von dem Beispiel nach Fig. 1 im Innern des Innenspeichers in geringem Abstand, beispielsweise wieder ca. 2 mm entlang dessen Seitenwand und vorzugsweise bis auf eine zentrale Aussparung u auch entlang des Bodens des Innenspeichers eine Leitwandung q angeordnet, welche mit der Innenspeicherwand einen Aufströmspalt r bildet. Diese Leitwandung hat die vorteilhafte Wirkung, daß die von dem Heizwasser im Strömungsspalt übertragene Wärme konzentriert einem kleinen Brauchwasservolumen im Aufströmspalt zugeführt wird, welches dadurch schnell auf eine hohe Temperatur, idealerweise die Temperatur des in den Strömungsspalt i einströmenden Heizwassers aufheizbar ist, insbesondere auch durch die Gegenstrombewegung des heißen Heizwassers im Strömungsspalt i einerseits und des Brauchwassers im Aufströmspalt r. Das aus dem Aufströmspalt oben ausströmende erwärmte Brauchwasser bildet auch bei zuvor vollständig durch Kaltwasserzulauf abgekühltem Brauchwasser schnell eine Schicht erwärmten Brauchwassers bei der Entnahmeöffnung e über dem ansonsten kühlen Brauchwasser. Die Schichtgrenze wird zunehmend nach unten verschoben, wobei ständig die für eine hohe Wärmeübertragungsleitung günstige Bedingung der Einströmung kühlen Brauchwassers in die untere Einströmöffnung des Aufströmkanals gegeben ist. Die Leitwandung q besteht vorteilhafterweise aus einem schlecht wärmeleitenden Material, insbesondere aus Kunststoff wie beispielsweise Polypropylen. Auch in dem Aufströmspalt r können wie zum Strömungsspalt i beschrieben strömungshemmende Leitstrukturen vorgesehen sein.

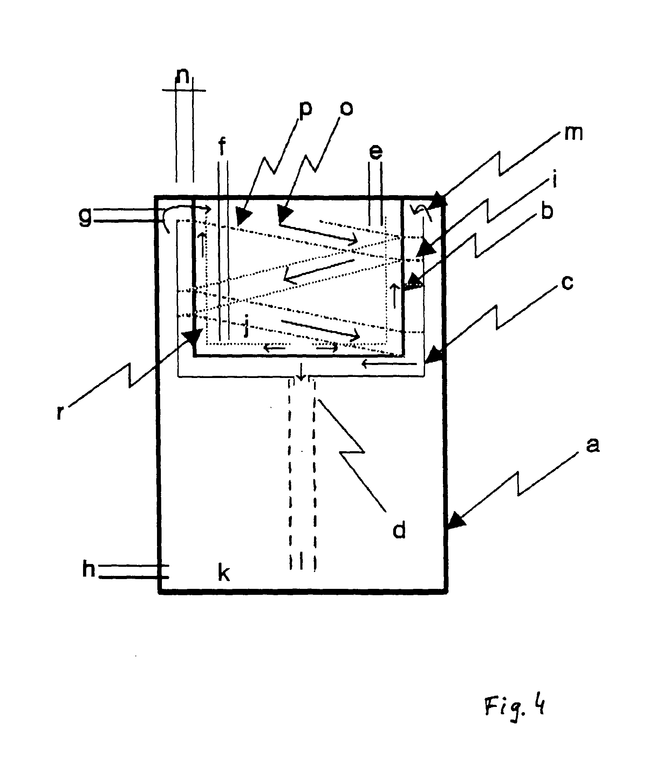

Die in Fig. 4 skizzierte Anordnung verbindet die Umweg-Leitstruktur nach Fig. 2 mit der Leitwandung im Innenspeicher nach Fig. 3 und erreicht damit eine besonders vorteilhafte Wärmeübertragung vom Heizwasser auf das Brauchwasser. Zur weiter verbesserten Wärmeübertragung können außen und/oder innen an der Wand des Innenspeichers oberflächenvergrössernde Strukturen vorgesehen sein, welche auch als Leitstrukturen in der beschriebenen Weise wirken können.

Die der vorstehenden Beschreibung, den Ansprüchen sowie den Zeichnungen entnehmbaren Merkmale sind sowohl einzeln als auch in verschiedenen Kombinationen vorteilhaft realisierbar.

Die Erfindung ist nicht auf die beschriebenen Ausführungsbeispiele beschränkt, sowohl im Rahmen fachmännischen Könnens auf mancherlei Weise abwandelbar. Insbesondere weichen die Bauformen von Hauptspeicher und Innenspeicher typischerweise von der einfachen skizzierten Form ab.

## Patentansprüche

1. Warmwasser-Speicheranordnung mit einem Hauptspeicher und einem in dessen oberem Bereich angeordneten Innenspeicher, wobei der Innenspeicher von einer gering beabstandeten Hüllwand umgeben ist, welche mit dem Innenspeicher einen oben zum Hauptspeicher offenen Strömungsspalt bildet und nach unten in einen in den unteren Bereich des Hauptspeichers führenden Abströmkanal mündet, dadurch gekennzeichnet, daß der Abströmkanal eine Mehrzahl seitlicher Öffnungen auf unterschiedlicher Höhe aufweist.

2. Anordnung nach Anspruch 1, dadurch gekennzeichnet, daß in dem Strömungsspalt und/oder dem Abströmkanal Leitstrukturen ausgebildet sind, welche der freien Strömung entgegenwirken.

3. Anordnung nach Anspruch 2, dadurch gekennzeichnet, daß der Strömungsspalt in einem vertikalen Abschnitt Leitstrukturen zur Erzeugung horizontaler Strömungskomponenten aufweist.

4. Anordnung nach Anspruch 2 oder 3, dadurch gekennzeichnet, daß der Strömungsspalt in einem sich radial vor dem Abströmkanal verbreiternden flachen oder kegeligen Abschnitt Leitstrukturen zur Erzeugung tangentialer Strömungskomponenten aufweist.

5. Anordnung nach einem der Ansprüche 1 bis 4, dadurch gekennzeichnet, daß eine innerhalb des Innenspeichers angeordnete Leitwandung in geringem Abstand von dessen seitlicher Innenwand verläuft und mit dieser einen Aufströmspalt mit einer tiefliegenden Einströmöffnung und einer hochliegenden Ausströmöffnung bildet.

6. Anordnung nach einem der Ansprüche 1 bis 5, dadurch gekennzeichnet, daß die seitlichen Öffnungen des Abströmkanals als Strömungsführungen mit einer Umlenkung der Strömungsrichtung gegen die Hauptströmungsrichtung im Abströmkanal von mehr als 90 ° ausgebildet sind.

7. Anordnung nach einem der Ansprüche 1 bis 6, dadurch gekennzeichnet, daß die Wand des Innenspeichers aus gut wärmeleitendem Material besteht.

8. Anordnung nach einem der Ansprüche 1 bis 7, dadurch gekennzeichnet, daß die Hüllwand und der Abströmkanal ein geringes Wärmeleitvermögen aufweisen.

9. Anordnung nach einem der Ansprüche 1 bis 8, dadurch gekennzeichnet, daß die Wand des Innenspeichers mit nach innen und/oder mit nach außen weisenden oberflächenvergrößernden Strukturen, beispielsweise Rippen, versehen ist.

10. Anordnung nach einem der Ansprüche 1 bis 9, dadurch gekennzeichnet, daß der Abstand zwischen Hüllwand und Innenspeicher zumindest im überwiegenden Verlauf des Strömungskanals kleiner als 10 mm, insbesondere kleiner als 4 mm ist.
